# EUROPÄISCHE PATENTSCHRIFT

(11) **EP 1 989 521 B1**
(45) Veröffentlichungstag und Bekanntmachung des Hinweises auf die Patenterteilung: **22.06.2011**
(21) Anmeldenummer: 06818715.2
(22) Anmeldetag: 22.11.2006
(51) Int. Cl.: G01F 25/00, G01F 23/296

(54) **SCHALTUNGSANORDNUNG BZW. VERFAHREN ZUR FUNKTIONSÜBERWACHUNG EINES VIBRATIONS-GRENZSCHALTERS UND/ODER EINER FÜLLSTAND-MESSVORRICHTUNG**
CIRCUIT ARRANGEMENT AND METHOD FOR MONITORING FUNCTIONING OF A VIBRATION LIMIT SWITCH AND/OR A LEVEL METER
ENSEMBLE CIRCUIT ET PROCÉDÉ DE SURVEILLANCE FONCTIONNELLE D'UN INTERRUPTEUR DE FIN DE COURSE À VIBRATIONS ET / OU D'UN DISPOSITIF DE MESURE DE NIVEAU DE REMPLISSAGE

(30) Priorität: 01.03.2006 DE 102006009763
(43) Veröffentlichungstag der Anmeldung: 12.11.2008
(73) Patentinhaber: VEGA Grieshaber KG, 77709 Wolfach (DE)
(72) Erfinder: WOEHRLE, Siegbert, 77761 Schiltach (DE)
(74) Vertreter: Göhring, Robert
(86) Internationale Anmeldenummer: PCT/EP2006/011167
(87) Internationale Veröffentlichungsnummer: WO 2007/101461

(56) Entgegenhaltungen:
- DE-A1- 4 232 719
- DE-A1- 10 023 306
- US-A- 4 299 114
- US-A- 5 223 819
- US-A1- 2005 210 954

## Beschreibung

Die Erfindung bezieht sich auf eine Schaltungsanordnung zur Funktionsüberwachung eines Vibrations-Grenzschalters und/oder einer Füllstand-Messvorrichtung mit den oberbegrifflichen Merkmalen des Patentanspruchs 1 bzw. auf ein Verfahren für eine solche Füllstandsüberwachung.

Vibrations-Grenzschalter dienen in der Regel als Grenzstand-Messvorrichtungen. Zur Erzeugung und zur Erfassung von Vibrationen bzw. Schwingungen werden piezo-elektrische Schwingungseinrichtungen eingesetzt. Allgemein besteht das Problem, dass im Fehlerfall einer solchen Vorrichtung kein falscher Schaltzustand ausgegeben werden darf, weshalb eine Funktionsüberwachung solcher Anordnungen vorgesehen werden muss.

Um bei der Entwicklung von Füllstand-Messgeräten gemäß dem internationalen Standard IEC 61508 einen hohen Sicherheits-Integritäts-Level zu erreichen, werden an die entsprechenden Geräte erhöhte Anforderungen für den Fehlerfall gestellt. Defekte Geräte dürfen nicht zu einem gefährlichen Ausfall führen, weshalb im Fehlerfall das Gerät in den Stör-Meldezustand gehen muss, wobei die Ausgangsstufe in einen sicheren Zustand geht, bei dem nachfolgende Einrichtungen, beispielsweise Pumpen, in einen bestimmten Betriebszustand versetzt werden. Als Fehler sind insbesondere Unterbrechungen oder ein Kurzschluss von Leitungen zu dem Antriebselement, vorliegend den Schwingungseinrichtungen, ein defektes Antriebselement oder ein Bauteile-Ausfall in einer Oszillator-Schaltung zu sehen. Allgemein bekannt sind für Füllstand-Messgeräte oder Grenzstand-Messgeräte Schaltungen einer Füllstand-Messvorrichtung bzw. eines Vibrations-Grenzschalters. Eine solche Schaltung umfasst ein erstes piezo-elektrisches Schwingungseelement als eine Sendeeinrichtung, ein zweites piezo-elektrisches Schwingungselement als Empfangseinrichtung und einen Oszillatorkreis, dessen Ein- und Ausgang im normalen Betrieb mit den Schwingungseinrichtungen verbunden sind, deren zweite Anschlüsse auf einem gemeinsamen Massepotential liegen. Ein üblicher Oszillatorkreis besteht dabei aus einem Verstärker, einem Filter und einem Komparator, welche in Reihe mit Piezo-Elementen als den Schwingungseinrichtungen geschaltet sind. Über einen Abgriff wird eine Frequenz der momentanen Schwingung an eine Auswerteeinrichtung in Form beispielsweise eines Prozessors oder nachgeschalteten Computers ausgegeben.

DE 100 23 306 C2 beschreibt eine Schaltung zur Funktionsüberwachung, bei welcher mittels einer Überwachungsschaltung die Piezo-Kapazität von einem einzigen Piezo-Element sowie dessen Zuleitungen überwacht werden. Anwendbar ist eine entsprechende Verfahrensweise jedoch nur bei einem Antrieb mit einem einzigen Piezo-Element, welches über eine Zweidraht-Leitung angetrieben wird.

Zur Leitungsbruch-Überwachung für einen Zwei-Piezo-Antrieb mit getrennten Piezo-Elementen als Sendeeinrichtung und Empfangseinrichtung ist eine Überwachung der Leitungen über eine Gleichstromschleife bekannt. Dabei wird ein Gleichstrom überwacht, der über ohmsche Widerstände fließt, die parallel zu Sende- und Empfangs-Piezo-Element geschaltet sind. In der Praxis ist eine Anbringung solcher Überwachungselemente an einem piezo-elektrischen Antrieb aufgrund der üblicherweise beengten Platzverhältnisse und der geforderten hohen Temperaturen schwierig. Außerdem können Unterbrechungen nur bis zu den Überwachungselementen detektiert werden. Fehler, welche direkt am Antrieb auftreten, beispielsweise ein Abbrechen der Leitungs-Kontaktierung am Piezo-Element oder eine Beschädigung des Piezo-Elements selber, können mit einer solchen Anordnung nicht detektiert werden.

DE 42 32 719 A1 beschreibt eine Schaltung und Verfahrensweise zur Überwachung eines Oszillatorkreises in einer Füllstand-Messvorrichtung. In regelmäßigen Abständen wird ein Referenzglied anstelle eines eigentlichen Piezo-Antriebs, das heißt anstelle einer Schwingungseinrichtung, an den Eingang des Oszillatorkreises geschaltet. Dadurch entsteht eine Schwingung, welche der Frequenz des Bedecktzustands einer mit dem Piezo-Element verbundenen Schwinggabel entspricht.

Die Aufgabe der Erfindung besteht darin, eine Schaltungsanordnung bzw. ein Verfahren vorzuschlagen, welche eine Funktionsüberwachung einer Füllstand-Messvorrichtung, und insbesondere eines Vibrations-Grenzschalters, auf alternative Art und Weise ermöglichen. Insbesondere soll auch die Funktion der Schwingungseinrichtungen bei einer Anordnung mit getrennten Sende- und Empfangsschwingungseinrichtungen mitüberwacht werden können.

Diese Aufgabe wird gelöst durch eine Schaltungsanordnung mit den Merkmalen der Patentansprüche 1, 6, 11 bzw. durch Verfahren mit den Merkmalen der Patentansprüche 13 bzw. 14.

Vorteilhafte Ausgestaltungen sind Gegenstand der abhängigen Ansprüche.

Die Schaltungsanordnungen bzw. Verfahren beruhen auf dem gemeinsamen Grundprinzip, dass die beiden piezo-elektrischen Schwingungseinrichtungen, welche als Sendeeinrichtung bzw. als Empfangseinrichtung eingesetzt werden, während eines jeweils zeitweiligen Überwachungsbetriebs zueinander parallel geschaltet werden, wobei diese parallel geschaltete Anordnung in Reihe mit einer entsprechenden Messeinrichtung geschaltet wird. Die Messeinrichtung dient zum Bestimmen der Kapazität der beiden parallel geschalteten Schwingungseinrichtungen, wobei zwei verschiedene Arten von Kapazitäts-Messeinrichtungen vorgeschlagen werden. Außerdem wird vorzugsweise der Oszillatorkreis als Schwingungsquelle derart in die Reihenschaltung eingebracht, dass der auf seiner Resonanz-Frequenz schwingende Oszillatorkreis die beiden zueinander parallel geschalteten piezo-elektrischen Schwingungseinrichtungen während des Überwachungsbetriebs anregt.

Die Erfindungsgemäße Schaltungsanordnung, vermeidet eine aufwändige Anbringung von Überwachungselementen am Antrieb bzw. an den Schwingungseinrichtungen und ist daher auch bei beengten Platzverhältnissen und zusätzlich auch bei geforderten hohen Temperaturen einsetzbar. Fehler, welche direkt am Antrieb auftreten, können detektiert werden, wie z.B. ein Abbrechen einer Kontaktierung einer Schwingungseinrichtung oder eine Beschädigung der Schwingungseinrichtung selber.

Bevorzugt wird gemäss erster Ausführungsform eine Schaltungsanordnung zur Funktionsüberwachung einer Füllstand-Messvorrichtung und insbesondere eines Vibrations-Grenzschalters mit einer ersten piezo-elektrischen Schwingungseinrichtung als Sendeeinrichtung, einer zweiten piezo-elektrischen Schwingungseinrichtung als einer Empfangseinrichtung, einem Oszillatorkreis, dessen Eingang und Ausgang im normalen Betrieb mit den Schwingungseinrichtungen verbunden sind, deren andere Anschlüsse auf einem gemeinsamen Massepotential liegen, und einer Überwachungsschaltung zur Funktionsüberwachung, wobei die Überwachungsschaltung eine Schalteinrichtung aufweist zum zeitweiligen Parallelschalten der ersten und der zweiten Schwingungseinrichtung und zum Schalten der parallelgeschalteten Schwingungseinrichtungen in Reihe zu einer Kapazitäts-Messeinrichtung während eines zeitweiligen Überwachungsbetriebes, wobei ein Kapazitätswert als Indikator für die Funktion der Schwingungseinrichtungen und/oder von Leitungen zu den Schwingungseinrichtungen durch die Überwachungsschaltung bereitgestellt wird.

Die Überwachungsschaltung weist bevorzugt eine dritte Schalteinrichtung auf zum Schalten der Schwingungseinrichtungen wahlweise auf Masse oder auf einen Referenzkondensator der Kapazitäts-Messeinrichtung.

Die Überwachungsschaltung weist vorteilhaft eine Oszillatorkreis-Schalteinrichtung auf zum Anlegen einer Schwingung mit definierter Frequenz, insbesondere einer Resonanzfrequenz des Oszillatorkreises an einem ersten Anschluss der Kapazitäts-Messeinrichtung, insbesondere an dem Referenzkondensator und gleichzeitig zum Anlegen der invertierten Schwingung des Oszillatorkreises an einen Anschluss der parallel geschalteten Schwingungseinrichtungen, so dass eine im Kreis geschlossene Reihenschaltung vom Oszillatorkreis mit einem Inverter, den zueinander parallel geschalteten Schwingungseinrichtungen und dem Referenzkondensator der Kapazitäts-Messeinrichtung entsteht.

Ein Synchrongleichrichter dient bevorzugt zum Umsetzen einer Wechselspannung der Kapazitäts-Messeinrichtung, in eine Gleichspannung, deren Spannungswert von der Gesamtkapazität von den Schwingungseinrichtungen und von deren Zuleitungen einerseits, und der Kapazität des Referenzkondensators andererseits, abhängt. Die Ausgangs- Gleichspannung des Synchron-gleichrichters ist dabei unabhängig von der momentanen Frequenz des Oszillatorkreises.

Bevorzugt wird gemäss zweiter Ausführungsform eine Schaltungsanordnung zur Funktionsüberwachung eines Vibrations-Grenzschalters und/oder einer Füllstand-Messvorrichtung mit einer ersten piezo-elektrischen Schwingungseinrichtung als Sendeeinrichtung, einer zweiten piezo-elektrischen Schwingungseinrichtung als einer Empfangseinrichtung, einem Oszillatorkreis, dessen Eingang und Ausgang im normalen Betrieb mit den Schwingungseinrichtungen verbunden sind, deren zweite Anschlüsse auf einem gemeinsamen Massepotential liegen, und einer Überwachungsschaltung zur Funktionsüberwachung, wobei die Überwachungsschaltung eine Schalteinrichtung aufweist zum zeitweiligen Parallel-Schalten der ersten und der zweiten Schwingungseinrichtung und zum Schalten der parallel geschalteten Schwingungseinrichtungen in Reihe zu einer Umladestrom-Messeinrichtung zum Abgreifen eines Umladestroms der Schwingungseinrichtungen während eines zeitweiligen Überwachungsbetriebes, wobei ein Kapazitätswert als Indikator für die Funktion der Schwingungseinrichtungen und/oder von Leitungen zu den Schwingungseinrichtungen durch die Überwachungsschaltung bereitgestellt wird.

Die Umladestrom-Messeinrichtung weist bevorzugt ein Tiefpassfilter auf zum Glätten des von den Schwingungseinrichtungen abgegriffenen Umladestroms.

Die Überwachungsschaltung weist vorteilhaft eine dritte Schalteinrichtung auf zum Schalten der Schwingungseinrichtungen wahlweise auf Masse oder auf einen Widerstand der Umladestrom-Messeinrichtung.

Solche Überwachungsschaltungen weisen bevorzugt eine Oszillatorkreis-Schalteinrichtung auf zum Anlegen einer Resonanzfrequenz, insbesondere zum Anlegen einer invertierten Resonanzfrequenz des Oszillatorkreises an die während des Überwachungsbetriebs zueinander parallelgeschalteten Schwingungseinrichtungen.

Als weitere Ausführungsform kann eine Prüfspannung eines Spannungsgenerators während des Überwachungsbetriebs anstelle einer Oszillatorkreisspannung des Oszillatorkreises an die zueinander parallel geschalteten Schwingungseinrichtungen angelegt werden.

Bevorzugt weist als weitere vorteilhafte Ausführungsform die Überwachungsschaltung eine Oszillatorkreis-Schalteinrichtung zum zeitweiligen Verbinden von Eingang und Ausgang des Oszillatorkreises für einen Überwachungsbetrieb zur Funktionsüberwachung auf, so dass der Oszillatorkreis auf einer definierten Frequenz schwingt, wobei die definierte Frequenz als Indikator für die Funktion des Oszillatorkreises bereitgestellt wird. Die definierte Frequenz ist vorteilhaft die momentane Resonanz-Frequenz des Oszillatorkreises, wobei die definierte Frequenz mittels einer Vergleichseinrichtung mit einem Referenzwert verglichen werden kann.

Bevorzugt wird gemäss erster Ausführungsform ein Verfahren zur Funktionsüberwachung einer Füllstand-Messvorrichtung, und insbesondere eines Vibrations-Grenzschalters, bei dem in einem normalen Betrieb eine erste piezo-elektrische Schwingungseinrichtung als Sendeeinrichtung und eine zweite piezo-elektrische Schwingungseinrichtung als Empfangseinrichtung mit einem Eingang und einem Ausgang eines Oszillatorkreises verbunden werden und zur Funktionsüberwachung in einem Überwachungsbetrieb eine Überwachungsschaltung aktiviert wird, wobei im Überwachungsbetrieb die beiden Schwingungseinrichtungen zueinander parallel geschaltet werden und die parallel geschalteten Schwingungseinrichtungen in Reihe mit einer Kapazitäts-Messeinrichtung geschaltet werden zum Bereitstellen eines Kapazitätswerts als Indikator für die Funktion der Schwingungseinrichtungen und wobei eine Schwingung einer Schwingungsquel-1e mit einer definierten Frequenz, insbesondere einer Resonanz-Frequenz des Oszillatorkreises, in Reihe geschaltet wird mit den zueinander parallel geschalteten Schwingungseinrichtungen und einem Referenzkondensator der Kapazitäts-Messeinrichtung.

Bevorzugt wird gemäss zweiter Ausführungsform ein Verfahren zur Funktionsüberwachung einer Füllstand-Messvorrichtung, und insbesondere eines Vibrations-Grenzschalters, bei dem in einem normalen Betrieb eine erste piezo-elektrische Schwingungseinrichtung als Sendeeinrichtung und eine zweite piezo-elektrische Schwingungseinrichtung als Empfangseinrichtung mit einem Eingang und einem Ausgang eines Oszillatorkreises verbunden werden und zur Funktionsüberwachung in einem Überwachungsbetrieb eine Überwachungsschaltung aktiviert wird, wobei im Überwachungsbetrieb die beiden Schwingungseinrichtungen zueinander parallel geschaltet werden und die parallel geschalteten Schwingungseinrichtungen in Reihe mit einer Umladestrom-Messeinrichtung geschaltet werden zum Abgreifen eines Umladestroms der Schwingungseinrichtungen und Bereitstellen eines Kapazitätswertes als Indikator für die Funktion der Schwingungseinrichtungen und wobei eine Schwingung einer Schwingungsquelle mit einer definierten Frequenz, insbesondere einer Resonanz-Frequenz des Oszillatorkreises, in Reihe geschaltet wird mit den zueinander parallel geschalteten Schwingungseinrichtungen und einem Widerstand der Umladestrom-Messeinrichtung.

Vorteilhaft sind solche Verfahren, wenn für den Überwachungsbetrieb die zueinander parallel geschalteten Schwingungseinrichtungen mit einer Prüfspannung eines Spannungsgenerators anstelle einer Oszillatorkreisspannuhg des Oszillatorkreises beschaltet werden.

Vorteilhaft sind solche Verfahren, wenn der Oszillatorkreis einen verstimmbaren Filter aufweist und mittels eines Prozessors im Überwachungsbetrieb, der Oszillatorkreis auf die mit den Schwingungseinrichtungen verbundenen Schwinggabel durch Verstellen des Filters abgestimmt wird.

Während eines zeitweiligen Überwachungsbetriebs bzw. Testzyklus werden somit Ein- und Ausgang des Oszillatorkreises miteinander verbunden, wodurch der Oszillator auf seiner Resonanz-Frequenz schwingt. Diese Frequenz gibt Auskunft über die Funktion des Oszillatorkreises. Außerdem wird während des Überwachungsbetriebs eine Parallelschaltung von den beiden piezo-elektrischen Schwingungseinrichtungen für Sende- und Empfangsfunktion geschaltet und eine Messung der Gesamtkapazität durchgeführt. Unter der Gesamtkapazität ist dabei die Kapazität der beiden piezo-elektrischen Schwingungseinrichtungen und der Leitungen zu diesen zu verstehen. Die Kapazität gibt Auskunft über die Funktion des durch die Schwingungseinrichtungen gebildeten Antriebs.

Ausführungsbeispiele der Erfindung werden nachfolgend anhand von Figuren näher erläutert. Es zeigen:
- Fig. 1: eine erste beispielhafte Schaltungsanordnung eines Vibrations-Grenzschalters mit einer ersten Überwa- chungsschaltung zur Funktionsüberwachung von zwei pie- zo-elektrischen Schwingungseinrichtungen mit drei Schaltern S1, S2 und S3,
- Fig. 2: die Schaltungsanordnung von Fig. 1 bei einem normalen Betrieb in vereinfachter Darstellung, wobei die Schalter S1, S2 und S3 in der in Fig. 1 gezeigten Stellung angenommen sind, und
- Fig. 3: eine zweite beispielhafte Schaltungsanordnung zur Funktionsüberwachung mit einer zu Fig. 1 alternativen Überwachungsschaltung.

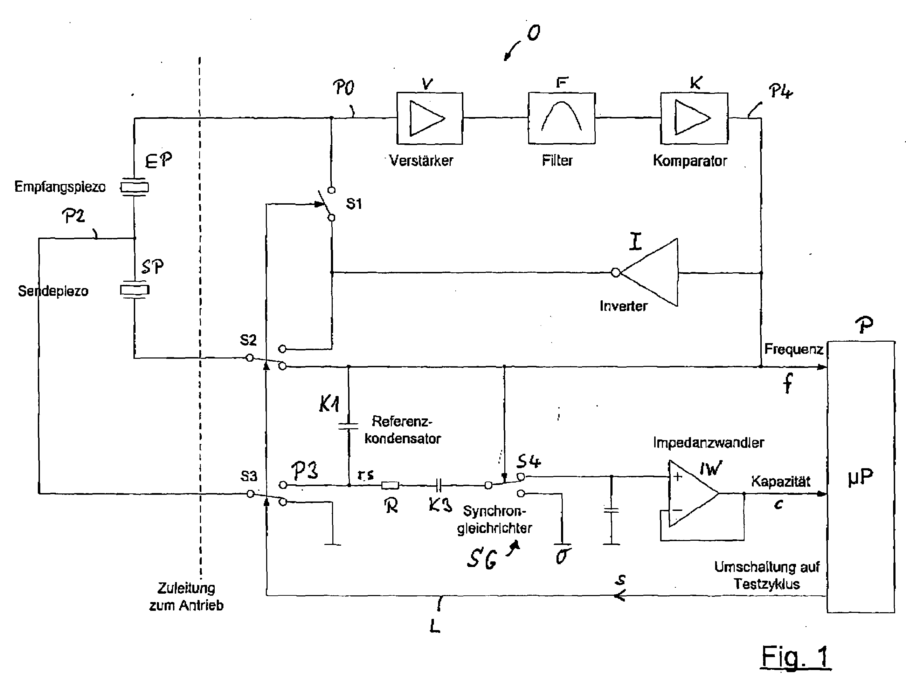

Fig.1 zeigt eine beispielhafte Schaltungsanordnung zur Funktionsüberwachung eines Vibrations-Grenzschalters, wobei das Grundprinzip der anhand der Ausführungsformen beschriebenen Überwachungsschaltungen auch auf eine Füllstand-Messvorrichtung übertragbar ist.

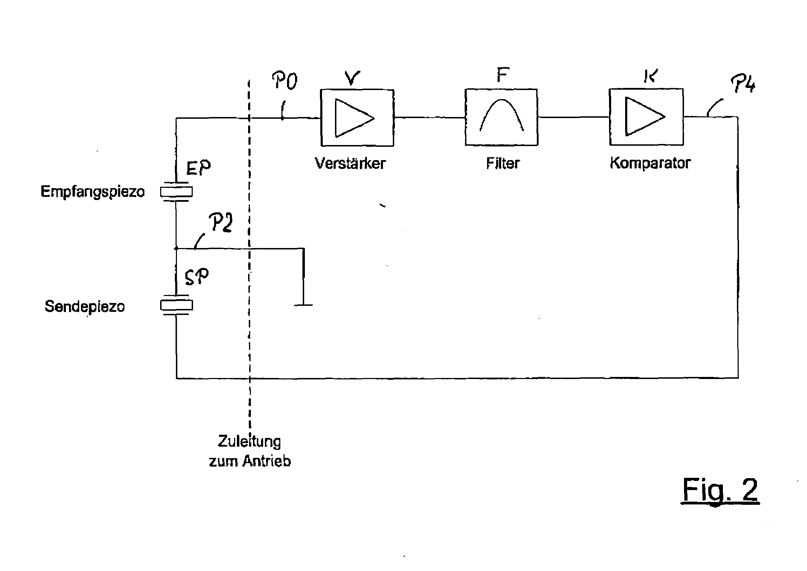

In für sich bekannter Art und Weise wird ein Oszillatorkreis 0 aus einem Verstärker V, einem Filter F und einem Komparator K gebildet, welche in Reihe geschaltet sind. Am Anfang bzw. Ende der Reihenschaltung wird entsprechend ein Eingang P0 bzw. ein Ausgang P4 des Oszillatorkreises 0 ausgebildet. Eine erste und eine zweite Schwingungseinrichtung SP und EP werden als piezo-elektrische Elemente an den Ausgang P4 und den Eingang P0 des Oszillatorkreises 0 geschaltet, wie dies anhand von Fig. 2 für den normalen Messbetrieb dargestellt ist. Die anderen Anschlüsse der beiden Schwingungseinrichtungen SP, EP liegen auf einem gemeinsamen zweiten Punkte P2, welcher im normalen Betrieb an Masse 0 geschaltet ist.

Eine Überwachungsschaltung gemäß Fig. 1 wird aus einer Vielzahl von Komponenten und Schalt- sowie Überwachungsabläufen ausgebildet, welche während eines Überwachungsbetriebs bzw. Testzyklus zeitweilig aktiviert werden. Die Schaltungsanordnung weist drei Schalter S1, S2 und S3 auf, welche mittels eines über eine Steuerleitung L anlegbaren Schaltsignals s vorzugsweise gemeinsam umgeschaltet werden, um die Anordnung entweder in den normalen Betrieb oder in den Überwachungsbetrieb zu schalten. In Fig. 1 sind die Schalter S1, S2 und S3 in ihrer im normalen Betrieb einnehmenden Stellung gezeigt. Fig. 2 zeigt das hierzu vereinfachte Schaltbild.

Zwischen dem Ausgang P4 und dem Eingang P0 des Oszillatorkreises 0 sind ein Inverter I und der erste Schalter S1 als eine Oszillatorkreis-Schalteinrichtung geschaltet. Im Überwachungsbetrieb werden mittels des ersten Schalters S1 und des Inverters I der Eingang P0 und der Ausgang P4 des Oszillatorkreises O miteinander verbunden. Über diese Rückkopplung wird erreicht, dass der durch den Oszillatorkreis O gebildete Oszillator auf seiner Resonanz-Frequenz als einer definierten Frequenz f schwingt.

Diese definierte Frequenz f wird z.B. am Ausgang P4 des Oszillatorkreises 0 erfasst und beispielsweise einem Prozessor P zugeführt. Ein Frequenzwert der Frequenz f wird als ein Indikator für die Funktion des Oszillatorkreises bereitgestellt. Der Prozessor P vergleicht diese Frequenz f mit einem abgespeicherten Referenzwert. Weicht die Frequenz f zu stark vom Referenzwert ab, liegt ein Fehler im Oszillatorkreis 0 vor, woraufhin der Prozessor P veranlasst, dass der Sensor bzw. Vibrations-Grenzschalter in einen Störzustand übergeht.

Der zweite Schalter S2 ist zwischen einerseits der piezo-elektrischen Schwingungseinrichtung SP, und andererseits den Ausgang P4 des Oszillatorkreises 0 geschaltet. Im Überwachungsbetrieb ist der zweite Schalter S2 umgeschaltet und bildet eine Verbindung zwischen der Schwingungseinrichtungen SP, und einen ersten Punkt P1, welcher zwischen den ersten Schalter S1 und den Inverter I geschaltet ist. Effektiv wird dadurch aus Sicht des zweiten Punkts P2 bzw. Abgriffs, welcher sich zwischen den beiden Schwingungseinrichtungen SP, EP befindet, und des Ausgangs P4 des Oszillatorkreises O bzw. des Inverters I eine Parallelschaltung der beiden Schwingungseinrichtungen SP, EP ausgebildet. Letztendlich wird mittels des Schalters S2 im Überwachungsbetrieb das Sende-Piezo parallel zum Empfangs-Piezo geschaltet.

Der dritte Schalter S3 ist zwischen den zweiten Punkt P2 bzw. Abgriff zwischen den beiden Schwingungseinrichtungen SP, EP einerseits und andererseits Masse 0 geschaltet. Im Überwachungsbetrieb trennt der dritte Schalter S3 die beiden Schwingungseinrichtungen SP, EP von Masse 0 und legt die beiden Schwingungseinrichtungen SP, EP an eine Kapazitäts-Messeinrichtung an, welche zur Überwachung der Funktionalität der Schwingungseinrichtungen SP, EP dient.

Die drei Schalter S1 - S3 bilden somit eine Schalteinrichtung aus, welche zwischen einem normalen Betrieb und einem Überwachungsbetrieb schaltet. Die Schalter können in für sich bekannter Form als mechanische Schaltelemente oder als elektronische Schaltelemente, wie z. B. Transistoren ausgebildet sein.

Im Überwachungsbetrieb schaltet der dritte Schalter S3 den Abgriff bzw. zweiten Punkt P2 zwischen den Schwingungseinrichtungen SP, EP an einen dritten Punkt P3. Zwischen den dritten Punkt P3 und den Ausgang P4 des Oszillatorkreises O ist ein Referenzkondensator K1 geschaltet. Im Überwachungsbetrieb ist der dritte Punkt P3 und damit der Referenzkondensator K1 in Reihe zu den parallel geschalteten Schwingungseinrichtungen SP, EP geschaltet. Diese Reihenschaltung wird gemäß der bevorzugtesten Ausführungsform mit dem Signal der Resonanzschwingung, das heißt der definierten Frequenz f des Oszillatorkreises 0, auf der einen Seite und mit dem invertierten Signal der Resonanzschwingung des Inverters I auf der anderen Seite angesteuert. Auf diese Art und Weise wird die Kapazität der Schwingungseinrichtungen SP, EP, das heißt des Antriebselementes des Vibrations-Grenzschalters, und der Leitungskapazität mit dem Referenzkondensator K1 verglichen. Am dritten Punkt P3 zwischen den parallel geschalteten Piezo-Elementen bzw. Schwingungseinrichtungen SP, EP und dem Referenzkondensator K1 entsteht eine Rechteckspannung rs, deren Amplitude abhängig ist vom Verhältnis von einerseits der Kapazität der Schwingungseinrichtungen und der Leitungen zu diesen und andererseits der Referenzkapazität des Referenzkondensators K1.

Mit Hilfe eines Synchron-Gleichrichters SG wird aus dieser Rechteckspannung rs eine Gleichspannung gebildet, welche unabhängig von der Frequenz f ist und bei einem konstanten Referenzkondensator nur von der Gesamtkapazität der Schwingungseinrichtungen SP, EP und der Zuleitungen abhängig ist. Diese Gleichspannung stellt somit einen Kapazitätswert c dar, welcher von dem Prozessor P als ein Indikator für die Funktion der Schwingungseinrichtungen SP, EP und von deren Zuleitungen auswertbar ist. Entsprechend wird die Gleichspannung des Synchron-Gleichrichters SG dem Prozessor P angelegt. Der Synchron-Gleichrichter SG wird aus Sicht des dritten Punktes P3 ausgebildet durch eine Anordnung aus vorzugsweise einem Widerstand R, einem Kondensator K3, einem vierten Schalter S4, einem Impedanzwandler IW und einem weiteren Kondensator K2, welcher zwischen den vierten Schalter S4 und den positiven Eingang des Impedanzwandlers IW auf der einen Seite und Masse 0 auf der anderen Seite geschaltet ist. Der vierte Schalter S4 schaltet den in Reihe geschalteten Widerstand R und den Kondensator K3 abhängig von der momentanen Spannung am Ausgang P4 des Oszillatorkreises 0 zwischen dem Impedanzwandler IW und Masse 0.

Die Spannung der Überwachungsschaltung bzw. der Kapazitätswert c wird an einem Ausgang für eine übergeordnete Einrichtung bereitgestellt oder einem integrierten Prozessor, wie dem beispielhaft dargestellten Prozessor P angelegt. Der Prozessor P vergleicht den Kapazitätswert c mit einem Sollwert, um eine Aussage über den Zustand der Antriebseinrichtung bzw. Schwingungseinrichtungen SP, EP und/oder deren Zuleitungen zu machen. Ist die Kapazität des Kapazitätswertes c kleiner als der Sollwert, liegt ein Leitungsbruch oder ein Defekt der Schwingungseinrichtungen vor. Eine Erhöhung der gemessenen Kapazität, das heißt ein gegenüber dem Sollwert erhöhter Kapazitätswert c, deutet auf einen Anstieg der Temperatur in der Umgebung der Schwingungseinrichtungen, das heißt der Temperatur, welcher das piezo-elektrische Material ausgesetzt ist, hin. Eine starke Erhöhung bis zur Höhe der Versorgungsspannung deutet auf einen Kurschluss der piezo-elektrischen Schwingungseinrichtungen SP, EP hin.

Gemäß eigenständig vorteilhafter Ausgestaltung kann die Rückkopplung durch Schließen des ersten Schalters S1 dazu verwendet werden, die Oszillatorschaltung bzw. den Oszillatorkreis O auf eine Schwinggabel abzugleichen, welche zur Schwingungsübertragung mit den piezo-elektrischen Schwingungseinrichtungen SP, EP verbunden ist. Für eine solche Anwendung wird als Filter F ein verstimmbares Filter im Oszillatorkreis 0 eingesetzt, so dass sich die Resonanz-Frequenz des Oszillatorkreises 0 so einstellen lässt, wie dies für die entsprechende Gabelfrequenz der Gabel erforderlich ist. Wird ein solcher Zusammenhang mittels einer Funktion beschrieben und im Prozessor P abgelegt oder dem Prozessor verfügbar gemacht, so lässt sich durch eine entsprechend automatisierte Einstellung des Filters F ein solcher Abgleichvorgang mittels des Prozessors P automatisieren.

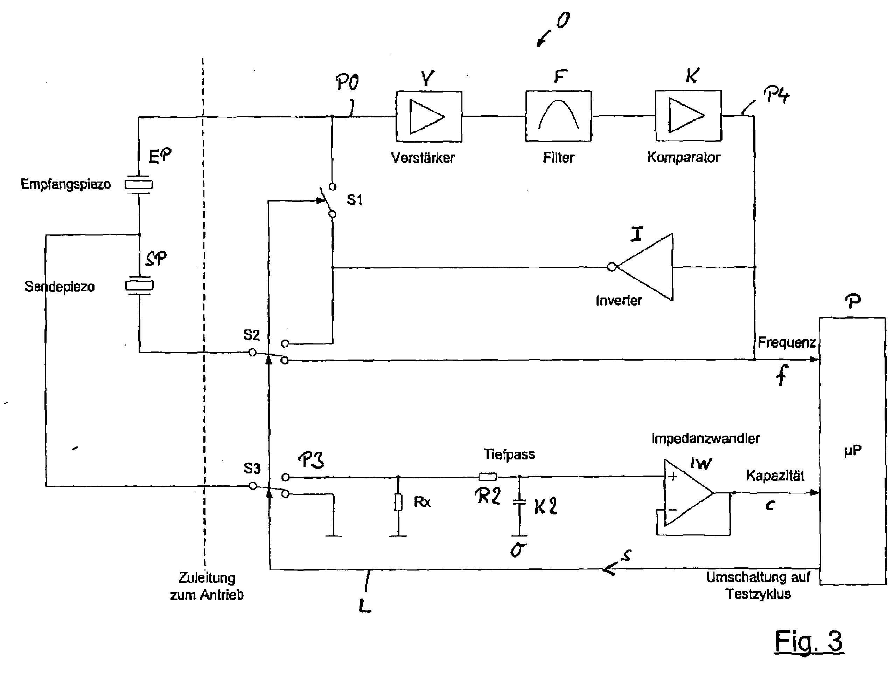

Fig. 3 zeigt eine weitere Ausführungsform mit einer modifizierten Überwachungsschaltung, wobei die Überwachungsschaltung eine Umladestrom-Messeinrichtung zum Abgreifen eines Umladestroms der Schwingungseinrichtungen SP, EP aufweist. Soweit in Fig. 3 dargestellte Komponenten und deren Funktionalität anhand Fig. 1 beschrieben sind, wird zur Vereinfachung auf die entsprechende Beschreibung von Fig. 1 verwiesen. Dies betrifft insbesondere den identischen Aufbau des Oszillatorkreises O mit dem Verstärker V, dem Filter F und dem Komparator K, welche zwischen einen Eingang P0 und einen Ausgang P4 geschaltet sind. In gleicher Art und Weise wie bei Fig. 1 sind ein Inverter I und ein erster Schalter S1 zwischen Eingang P0 und Ausgang P4 des Oszillatorkreises 0 geschaltet. Außerdem sind in gleicher Art und Weise an den Eingang P0 des Oszillatorkreises O und dessen Ausgang P4 zwei Schwingungseinrichtungen EP, SP und ein zweiter Schalter S2 geschaltet. Ebenso ist ein dritter Schalter S3 am anderen Anschluss der beiden Schwingungseinrichtungen SP, EP einerseits und andererseits wahlweise entweder Masse 0 oder die Überwachungsschaltung in Form der Umladestrom-Messeinrichtung geschaltet. Zum bevorzugten gleichzeitigen Schalten der drei Schalter S1 - S3 dient wiederum ein Schaltsignal s, welches vom Prozessor P bereitgestellt wird. Dem Prozessor P werden wie bei der Schaltungsanordnung gemäß Fig. 1 eine definierte Frequenz f in Form der Resonanz-Frequenz des Oszillatorkreises 0 im Fall des Überwachungsbetriebs und ein Kapazitätswert c der Überwachungsschaltung angelegt.

Die Umladestrom-Messeinrichtung besteht ausgehend von einem dritten Punkt P3, welcher im Überwachungsbetrieb vom dritten Schalter S3 beschaltet ist, in Reihe aus einem Widerstand R2 und einem Impedanzwandler IW wie im Fall der Anordnung gemäß Fig. 1. Zwischen den Widerstand R2 und den Impedanzwandler IW einerseits und Masse 0 andererseits ist ein Kondensator K2 geschaltet, wobei der Widerstand R2 und der Kondensator K2 einen Tiefpass ausbilden.

Außerdem ist zwischen den dritten Punkt P3 und den Widerstand R2 einerseits und andererseits Masse 0 ein weiterer Widerstand Rx geschaltet, wobei der dritte Punkt P3 zwischen diesem weiteren Widerstand Rx und den beiden Schwingungseinrichtungen SP, EP eine Umladespannung gegenüber Masse 0 bereitstellt. Die an dem mit den zueinander parallel geschalteten Schwingungseinrichtungen SP, EP in Reihe geschalteten weiteren Widerstand Rx abgreifbare Umladespannung ist proportional zum Umladestrom. Die Umladespannung wird über den Tiefpass geglättet und dem Impedanzwandler IW zur Bereitstellung des Kapazitätswertes c angelegt.

Der mittels einer solcher Schaltung bereitgestellte Kapazitätswert c entspricht einem Spannungswert, der allerdings nicht nur von der Kapazität der piezo-elektrischen Schwingungseinrichtungen abhängig ist sondern auch von der Messfrequenz, welche der Resonanz-Frequenz des rückgekoppelten Oszillatorkreises 0 entspricht. Aufgrund des gegenüber Fig. 1 eingeschränkten Anwendungsbereiches wird daher die Ausführungsform gemäß Fig. 1 besonders bevorzugt.

Die beiden Ausführungsformen gemäß Fig. 1 und Fig. 3 können weiter modifiziert werden, indem anstelle des Anlegens der Resonanz-Frequenz bzw. definierten Frequenz f des Oszillatorkreises O eine separate Spannung und/oder Schwingung zur Kapazitätsmessung an den zueinander parallel geschalteten Schwingungseinrichtungen SP, EP angelegt wird. In diesem Fall würde eine solche Spannung oder Schwingung von einem separaten Generator oder direkt von dem Prozessor P eingespeist. Dies würde den Schaltungsaufwand zwar erhöhen, wäre aber trotzdem vorteilhaft umsetzbar. Zum Ankoppeln der separaten Spannung bzw. elektrischen Schwingung würde vorzugsweise ein weiterer Schalter bereitgestellt, welcher den ersten Punkt P1 und/oder den Ausgang P4 des Oszillatorkreises O von den beiden Schwingungseinrichtungen für den Überwachungsbetrieb abkoppelt und die beiden Schwingungseinrichtungen im Überwachungsbetrieb an die separate Spannung ankoppelt.

## Patentansprüche

1. Schaltungsanordnung zur Funktionsüberwachung einer Füllstand-Messvorrichtung, insbesondere eines Vibrations-Grenzschalters, mit
- einer ersten piezo-elektrischen Schwingungseinrichtung (SP) als Sendeeinrichtung,
- einer zweiten piezo-elektrischen Schwingungseinrichtung (EP) als einer Empfangseinrichtung,
- einem Oszillatorkreis (O), dessen Eingang (P0) und Ausgang (P4) im normalen Betrieb mit den Schwingungseinrichtungen (EP, SP) verbunden sind, deren zweite Anschlüsse auf einem gemeinsamen Massepotential liegen, und
- einer Überwachungsschaltung zur Funktionsüberwachung,
**dadurch gekennzeichnet, dass**
- die Überwachungsschaltung eine Schalteinrichtung (S1 - S3) aufweist zum zeitweiligen Parallel-Schalten der ersten und der zweiten Schwingungseinrichtung (SP, EP) und zum Schalten der parallel geschalteten Schwingungseinrichtungen (SP, EP) in Reihe zu einer Kapazitäts-Messeinrichtung (K1, R, K2, K3, SG, IW, P) während eines zeitweiligen Überwachungsbetriebes, wobei ein Kapazitätswert (c) als Indikator für die Funktion der Schwingungseinrichtungen (SP, EP) und/oder von Leitungen zu den Schwingungseinrichtungen (SP, EP) durch die Überwachungsschaltung bereitgestellt wird.

2. Schaltungsanordnung nach Anspruch 1, bei der die Schalteinrichtung (S1 - S3) einen Schalter (S3) zum Schalten der Schwingungseinrichtungen (SP, EP) wahlweise auf Masse (0) oder auf einen Referenzkondensator (K1) der Kapazitäts-Messeinrichtung aufweist.

3. Schaltungsanordnung nach Anspruch 1 oder 2, bei der die Schalteinrichtung (S1 - S3) zwei weitere Schalter (S1, S2) aufweist zum Anlegen einer Schwingung mit definierter Frequenz (f), insbesondere einer Resonanzfrequenz, des Oszillatorkreises (O) an einem ersten Anschluss (P4, K1) der Kapazitäts-Messeinrichtung, insbesondere an dem Referenzkondensator (K1) und gleichzeitig zum Anlegen der invertierten Schwingung des Oszillatorkreises (O) an einen Anschluss (P1) der parallel geschalteten Schwingungseinrichtungen (SP, EP).

4. Schaltungsanordnung nach einem vorstehenden Anspruch mit einem Synchron-Gleichrichter (SG) zum Umsetzen einer Wechselspannung (rs) der Kapazitäts-Messeinrichtung, in eine Gleichspannung, deren Spannungswert von der Gesamtkapazität von den Schwingungseinrichtungen (SP, EP) und von deren Zuleitungen einerseits, und der Kapazität des Referenzkondensators andererseits, abhängt.

5. Schaltungsanordnung nach Anspruch 4, wobei der Spannungswert der Gleichspannung des Synchron-Gleichrichters (SG) unabhängig ist von einer momentanen Frequenz (f) des Oszillatorkreises (O).

6. Schaltungsanordnung zur Funktionsüberwachung eines Vibrations-Grenzschalters und/oder einer Füllstand-Messvorrichtung mit
- einer ersten piezo-elektrischen Schwingungseinrichtung (SP) als Sendeeinrichtung,
- einer zweiten piezo-elektrischen Schwingungseinrichtung (EP) als einer Empfangseinrichtung,
- einem Oszillatorkreis (O), dessen Eingang (P0) und Ausgang (P4) im normalen Betrieb mit den Schwingungseinrichtungen (EP, SP) verbunden sind, deren zweite Anschlüsse auf einem gemeinsamen Massepotential liegen, und
- einer Überwachungsschaltung zur Funktionsüberwachung,
**dadurch gekennzeichnet, dass**
- die Überwachungsschaltung eine Schalteinrichtung (S1 - S3) aufweist zum zeitweiligen Parallel-Schalten der ersten und der zweiten Schwingungseinrichtung (SP, EP) und zum Schalten der parallel geschalteten Schwingungseinrichtungen (SP, EP) in Reihe zu einer Umladestrom-Messeinrichtung (Rx, R2, K2, IW) an der ein Umladestrom der Schwingungseinrichtungen (SP, EP) während eines zeitweiligen Überwachungsbetriebes abgreifbar ist, wobei ein Kapazitätswert (c) als Indikator für die Funktion der Schwingungseinrichtungen (SP, EP) und/oder von Leitungen zu den Schwingungseinrichtungen durch die Überwachungsschaltung bereitgestellt wird.

7. Schaltungsanordnung nach Anspruch 6, bei der die Umladestrom-Messeinrichtung (Rx, R2, K2, IW) einen Tiefpassfilter (R2, K2) aufweist zum Glätten des von den Schwingungseinrichtungen (SP, EP) abgegriffenen Umladestroms.

8. Schaltungsanordnung nach Anspruch 6, bei der die Überwachungsschaltung eine dritte Schalteinrichtung (S3) aufweist zum Schalten der Schwingungseinrichtungen (SP, EP) wahlweise auf Masse (0) oder auf einen Widerstand (Rx) der Umladestrom-Messeinrichtung.

9. Schaltungsanordnung nach einem der Ansprüche 6 bis 8, bei der die Überwachungsschaltung eine Oszillatorkreis-Schalteinrichtung (S1, S2) aufweist zum Anlegen einer Resonanz-Frequenz, insbesondere zum Anlegen einer invertierten Resonanz-Frequenz des Oszillatorkreises (O) an die während des Überwachungsbetriebs zueinander parallel geschalteten Schwingungseinrichtungen (SP, EP).

10. Schaltungsanordnung nach Anspruch 1, 2 oder nach einem der Ansprüche 4 bis 8 mit einem Spannungsgenerator zum Erzeugen einer Prüfspannung, welche während des Überwachungsbetriebs anstelle einer Oszillatorkreisspannung des Oszillatorkreises (O) an die zueinander parallel geschalteten Schwingungseinrichtungen (SP, EP) anlegbar ist.

11. Schaltungsanordnung nach Anspruch 6, bie der die Überwachungsschaltung eine Oszillatorkreis-Schalteinrichtung (S1, I) zum zeitweiligen Verbinden von Eingang (P0) und Ausgang (P4) des Oszillatorkreises (O) für einen Überwachungsbetrieb zur Funktionsüberwachung aufweist, so dass der Oszillatorkreis (O) in einer definierten Frequenz (f) schwingt, wobei die definierte Frequenz (f) als Indikator für die Funktion des Oszillatorkreises (O) bereitgestellt wird.

12. Schaltungsanordnung nach Anspruch 11, wobei die definierte Frequenz (f) die momentane Resonanz-Frequenz des Oszillatorkreises (0) ist und wobei die definierte Frequenz (f) mittels einer vergleichseinrichtung mit einem Referenzwert verglichen wird.

13. Verfahren zur Funktionsüberwachung einer Füllstand-Messvorrichtung, und insbesondere eines Vibrations-Grenzschalters, bei dem
- in einem normalen Betriebsmodus eine erste piezo-elektrische Schwingungseinrichtung (SP) als Sendeeinrichtung und eine zweite piezo-elektrische Schwingungseinrichtung (EP) als Empfangseinrichtung mit einem Eingang (P0) und einem Ausgang (P4) eines Oszillatorkreises (O) verbunden werden und
- zur Funktionsüberwachung in einem Überwachungsbetrieb eine Überwachungsschaltung aktiviert wird,
**dadurch gekennzeichnet, dass**
- im Überwachungsbetrieb die beiden Schwingungseinrichtungen (SP, EP) zueinander parallel geschaltet werden und die parallel geschalteten Schwingungseinrichtungen in Reihe mit einer Kapazitäts-Messeinrichtung geschaltet werden zum Bereitstellen eines Kapazitätswerts (c) als Indikator für die Funktion der Schwingungseinrichtungen (SP, EP),
- wobei eine Schwingung einer Schwingungsquelle mit einer definierten Frequenz (f), insbesondere einer Resonanz-Frequenz des Oszillatorkreises (O), in Reihe geschaltet wird mit den zueinander parallel geschalteten Schwingungseinrichtungen (SP, EP) und einem Referenzkondensator (K1) der Kapazitäts-Messeinrichtung.

14. Verfahren zur Funktionsüberwachung einer Füllstand-Messvorrichtung, und insbesondere eines Vibrations-Grenzschalters, bei dem
- in einem normalen Betrieb eine erste piezo-elektrische Schwingungseinrichtung (SP) als Sendeeinrichtung und eine zweite piezo-elektrische Schwingungseinrichtung (EP) als Empfangseinrichtung mit einem Eingang (P0) und einem Ausgang (P4) eines Oszillatorkreises (O) verbunden werden und
- zur Funktionsüberwachung in einem Überwachungsbetrieb eine Überwachungsschaltung aktiviert wird,
**dadurch gekennzeichnet, dass**
- im Überwachungsbetrieb die beiden Schwingungseinrichtungen (SP, EP) zueinander parallel geschaltet werden und die parallel geschalteten Schwingungseinrichtungen in Reihe mit einer Umladestrom-Messeinrichtung geschaltet werden zum Abgreifen eines Umladestroms zwischen den Schwingungseinrichtungen und Bereitstellen eines Kapazitätswertes (c) als Indikator für die Funktion der Schwingungseinrichtungen (SP, EP),
- wobei eine Schwingung einer Schwingungsquelle mit einer definierten Frequenz (f), insbesondere einer Resonanz-Frequenz des Oszillatorkreises (O), in Reihe geschaltet wird mit den zueinander parallel geschalteten Schwingungseinrichtungen und einem Widerstand (Rx) der Umladestrom-Messeinriehtung.

15. Verfahren nach Anspruch 13 oder 14, bei dem für den Überwachungsbetrieb die zueinander parallel geschalteten Schwingungseinrichtungen (SP, EP) mit einer Prüfspannung eines Spannungsgenerators anstelle einer Oszillatorkreisspannung des Oszillatorkreises (O) beschaltet werden.

16. Verfahren nach Anspruch 13 oder 14, bei dem der Oszillatorkreis (O) einen verstimmbaren Filter (F) aufweist und mittels eines Prozessors (P) im Überwachungsbetrieb, der Oszillatorkreis auf die mit den Schwingungseinrichtungen (SP, EP) verbundenen Schwinggabel durch Verstellen des Filters (F) abgestimmt wird.

## Claims

1. A circuit arrangement for monitoring the functioning of a level-measuring appliance, in particular a vibration limit switch, with
- a first piezo-electric oscillation device (SP) as a transmitting device,
- a second piezo-electric oscillation device (EP) as a receiving device,
- an oscillator circuit (0), the input (P0) and the output (P4) of which are connected in normal operation to the oscillation devices (EP, SP), the second terminals of which are at a common ground potential, and
- a monitoring circuit for monitoring the functioning,
**characterized in that**
- the monitoring circuit has a switching device (S1 - S3) for the temporary parallel connection of the first and the second oscillation devices (SP, EP) and for connecting the parallel-connected oscillation devices (SP, EP) in series to a capacitance-measuring device (K1, R, K2, K3, SG, IW, P) during a temporary monitoring operation, wherein a capacitance value (c) is produced as an indicator of the functioning of the oscillation devices (SP, EP) and/or of lines to the oscillation devices (SP, EP) by the monitoring circuit.

2. A circuit arrangement according to claim 1, in which the switching device (S1 - S3) has a switch (S3) for connecting the oscillation devices (SP, EP) optionally to earth (0) or to a reference capacitor (K1) of the capacitance-measuring device.

3. A circuit arrangement according to claim 1 or 2, in which the switching device (S1 - S3) has two further switches (S1, S2) for applying an oscillation with a defined frequency (f), in particular a resonance frequency, of the oscillator circuit (0) to a first terminal (P4, K1) of the capacitance-measuring device, in particular to the reference capacitor (K1), and at the same time for applying the inverted oscillation of the oscillator circuit (O) to a terminal (P1) of the parallel-connected oscillation devices (SP, EP).

4. A circuit arrangement according to any one preceding claim with a synchronous rectifier (SG) for converting an alternating-current voltage (rs) of the capacitance-measuring device into a direct-current voltage, the voltage value of which depends upon the overall capacitance of the oscillation devices (SP, EP) and upon the supply lines thereof on the one hand, and upon the capacitance of the reference capacitor on the other hand.

5. A circuit arrangement according to claim 4, wherein the voltage value of the d.c. voltage of the synchronous rectifier (SG) is independent of a momentary frequency (f) of the oscillator circuit (O).

6. A circuit arrangement for monitoring the functioning of a vibration limit switch and/or a level-measuring appliance, with
- a first piezo-electric oscillation device (SP) as a transmitting device,
- a second piezo-electric oscillation device (EP) as a receiving device,
- an oscillator circuit (0), the input (P0) and the output (P4) of which are connected in normal operation to the oscillation devices (EP, SP), the second terminals of which are at a common ground potential, and
- a monitoring circuit for monitoring the functioning,
**characterized in that**
- the monitoring circuit has a switching device (S1 - S3) for the temporary parallel connection of the first and second the oscillation devices (SP, EP) and for connecting the parallel-connected oscillation devices (SP, EP) in series to a discharge-current-measuring appliance (Rx, R2, K2, IW) at which a discharge current of the oscillation devices (SP, EP) is capable of being tapped during a temporary monitoring operation, wherein a capacitance value (c) is produced as an indicator of the functioning of the oscillation devices (SP, EP) and/or of lines to the oscillation devices (SP, EP) by the monitoring circuit.

7. A circuit arrangement according to claim 6, in which the discharge-current-measuring appliance (Rx, R2, K2, IW) has a deep-pass filter (R2, K2) for evening out the discharge current tapped by the oscillation devices (SP, EP).

8. A circuit arrangement according to claim 6, in which the monitoring device has a third circuit device (S3) for switching the oscillation devices (SP, EP) optionally to earth (0) or to a resistor (Rx) of the discharge-current-measuring appliance.

9. A circuit arrangement according to any one of claims 6 to 8, in which the monitoring circuit has an oscillator-circuit-switching device (S1, S2) for applying a resonance frequency, in particular an inverted resonance frequency of the oscillator circuit (O), to the oscillation devices (SP, EP) connected in parallel to each other during the monitoring operation.

10. A circuit arrangement according to claim 1, 2 or any one of claims 4 to 8 with a voltage generator for producing a test voltage which is capable of being applied, instead of an oscillator-circuit voltage of the oscillator circuit (O), to the oscillation devices (SP, EP) connected in parallel to each other during the monitoring operation.

11. A circuit arrangement according to claim 6, in which the monitoring circuit has an oscillator-circuit-switching device (S1, I) for temporarily connecting the input (P0) and the output (P4) of the oscillator circuit (O) for a monitoring operation for monitoring the functioning, so that the oscillator circuit (O) oscillates at a defined frequency (f), wherein the defined frequency (f) is produced as an indicator of the functioning of the oscillator circuit (0).

12. A circuit arrangement according to claim 11, wherein the defined frequency (f) is the momentary resonance frequency of the oscillator circuit (0) and wherein the defined frequency (f) is compared with a reference value by means of a comparator device.

13. A method of monitoring the functioning of a level-measuring appliance, and in particular a vibration limit switch, in which
- a first piezo-electric oscillation device (SP) is connected as a transmitting device and a second piezo-electric oscillation device (EP) is connected as a receiving device to an input (P0) and an output (P4) of an oscillator circuit (O) in a normal operating mode and
- a monitoring circuit is activated for monitoring the functioning in a monitoring mode, **characterized in that**
- the two oscillation devices (SP, EP) are connected in parallel to each other in the monitoring operation and the parallel-connected oscillation devices are connected in series to a capacitance-measuring device in order to produce a capacitance value (c) as an indicator of the functioning of the oscillation devices (SP, EP),
- wherein an oscillation of an oscillation source with a defined frequency (f), in particular a resonance frequency of the oscillator circuit (0) is connected in series to the oscillation devices (SP, EP) connected in parallel to each other and to a reference capacitor (K1) of the capacitance-measuring device.

14. A method of monitoring the functioning of a level-measuring appliance, and in particular a vibration limit switch, in which
- a first piezo-electric oscillation device (SP) is connected as a transmitting device and a second piezo-electric oscillation device (EP) is connected as a receiving device to an input (P0) and an output (P4) of an oscillator circuit (O) in a normal operating mode and
- a monitoring circuit is activated for monitoring the functioning in a monitoring mode,
**characterized in that**
- the two oscillation devices (SP, EP) are connected in parallel to each other in the monitoring operation and the parallel-connected oscillation devices are connected in series to a discharge-current-measuring device in order to tap the discharge current between the oscillation devices and to produce a capacitance value (c) as an indicator of the functioning of the oscillation devices (SP, EP),
- wherein an oscillation of an oscillation source with a defined frequency (f), in particular a resonance frequency of the oscillator circuit (0) is connected in series to the oscillation devices connected in parallel to each other and to a resistor (Rx) of the discharge-current-measuring device.

15. A method according to claim 13 or 14, in which for the monitoring operation the oscillation devices (SP, EP) connected in parallel to each other are connected to a test voltage of a voltage generator instead of an oscillator-circuit voltage of the oscillator circuit (0).

16. A method according to claim 13 or 14, in which the oscillator circuit (0) has a filter (F) capable of being tuned and by means of a processor (P) in the monitoring operation the oscillator circuit is adjusted by setting the filter (F) to the tuning fork connected to the oscillation devices (SP, EP).

## Revendications

1. Circuit de surveillance du fonctionnement d'un dispositif de mesure de niveau de remplissage, notamment d'un commutateur de fin de course à vibrations, comprenant :
- un premier dispositif oscillant piézo-électrique (SP), comme installation de l'émission,
- un second dispositif oscillant piézo-électrique (EP), comme installation de réception,
- un circuit oscillant (0) dont l'entrée (P0) et la sortie (P4), en fonctionnement en mode normal, sont reliées aux dispositifs oscillants (EP, SP) et dont les secondes bornes sont à un potentiel de masse, commun, et
- un circuit de surveillance pour surveiller le fonctionnement,
circuit **caractérisé en ce que**
- le circuit de surveillance comporte une installation de commutation (S1-S3) pour brancher temporairement en parallèle le premier et le second dispositif oscillant (SP, EP) et pour mettre les dispositifs oscillants en parallèle (SP, EP), en série avec l'installation de mesure capacitive (K1, R, K2, K3, SG, IW, P), pendant le mode de surveillance temporaire,
- une valeur de capacité (c) constituant une indication du fonctionnement des dispositifs oscillants (SP, EP) et/ou des lignes est appliquée aux dispositifs oscillants (SP, EP) par le circuit de surveillance.

2. Circuit selon la revendication 1,
**caractérisé en ce que**
l'installation de commutation (S1-S3) comporte un commutateur (S3) pour commuter les dispositifs oscillants (SP, EP) sélectivement sur la masse (0) ou sur un condensateur de référence (K1) de l'installation de mesure capacitive.

3. Circuit selon la revendication 1 ou 2,
**caractérisé en ce que**
l'installation de commutation (S1-S3) comporte deux autres commutateurs (S1, S2) pour appliquer une oscillation de fréquence définie (f), notamment la fréquence de résonance du circuit oscillant (0) à une première borne (P4, K1) de l'installation de mesure capacitive, notamment au condensateur de référence (K1) et en même temps pour appliquer l'oscillation inversée fournie par le circuit oscillant (0), à une borne (P1) des dispositifs oscillants (SP, EP), branchés en parallèle.

4. Circuit selon l'une des revendications précédentes,
**caractérisé en ce qu'**
il comporte un redresseur synchrone (SG) pour convertir une tension alternative (rs) de l'installation de mesure capacitive, en une tension redressée dont l'amplitude dépend d'une part de la capacité totale des dispositifs oscillants (SP, EP) et des lignes d'alimentation et d'autre part, de la capacité du condensateur de référence.

5. Circuit selon la revendication 4,
**caractérisé en ce que**
l'amplitude de la tension continue du redresseur syn chrone (SG) est indépendante de la fréquence instantanée (f) du circuit oscillant (O).

6. Circuit pour surveiller le fonctionnement d'un commutateur de fin de course à vibrations et/ou d'un dispositif de mesure de niveau de remplissage, comprenant :
- un premier dispositif oscillant piézo-électrique (SP), fonctionnant comme installation d'émission,
- un second dispositif oscillant piézo-électrique (EP), fonctionnant comme installation de réception,
- un circuit oscillant (0) dont l'entrée (P0) et la sortie (P4), en mode de fonctionnement normal, sont reliées aux dispositifs oscillants (EP, SP) et dont les secondes bornes sont reliées à un potentiel de masse, commun, et
- un circuit de surveillance pour surveiller le fonctionnement,
circuit **caractérisé en ce que**
- le circuit de surveillance comporte une installation de commutation (S1-S3) pour brancher temporairement en parallèle le premier et le second dispositif oscillant (SP, EP) et pour mettre les dispositifs oscillants (SP, EP) branchés en parallèle, en série avec une installation de mesure de courant de transfert de charge (Rx, R2, K2, IW), qui peut détecter un courant de transfert de charge des dispositifs oscillants (SP, EP), pendant un mode de transfert de charge effectué temporairement, et
- une capacité (c) comme indication du fonctionnement des dispositifs oscillants (SP, EP) et/ou des lignes est fournie aux installations oscillantes, par le circuit de surveillance.

7. Circuit selon la revendication 6,
**caractérisé en ce que**
l'installation de mesure de transfert de charge (Rx, R2, K2, IW) comporte un filtre passe-bas (R2, K2) pour lisser le courant de transfert de charge pris sur les dispositifs oscillants (SP, EP).

8. Circuit selon la revendication 6,
**caractérisé en ce que**
le circuit de surveillance comporte une troisième installation de commutation (S3) pour commuter les dispositifs oscillants (SP, EP) sélectivement sur la masse (0) ou sur une résistance (Rx) de l'installation de mesure de courant de transfert de charge.

9. Circuit selon l'une des revendications 6 à 8,
**caractérisé en ce que**
le circuit de surveillance comporte une installation de commutation des circuits oscillants (S1-S2) pour appliquer une fréquence de résonance, notamment la fréquence de résonance inversée du circuit oscillant (0) aux deux dispositifs oscillants (SP, EP) branchés en parallèle pendant le mode de surveillance.

10. Circuit selon les revendications 1, 2 ou l'une des revendications 4 à 8, comportant un générateur de tension pour générer une tension de contrôle appliquée pendant le mode de surveillance à la place de la tension du circuit oscillant (0) aux dispositifs oscillants (SP, EP) branchés en parallèle.

11. Circuit selon la revendication 6,
**caractérisé en ce que**
le circuit de surveillance comporte une installation de commutation de circuits oscillants (S1, I) pour relier temporairement l'entrée (P0) et la sortie (P4) du circuit oscillant (0) pour un mode de surveillance pour surveiller le fonctionnement, de sorte que le circuit oscillant (0) fonctionne à une fréquence définie (f), cette fréquence définie (f) donnant une indication du fonctionnement du circuit oscillant (0).

12. Circuit selon la revendication 11,
**caractérisé en ce que**
la fréquence définie (f) est la fréquence de résonance instantanée du circuit oscillant (0), et
la fréquence définie (f) est comparée à une valeur de référence par une installation de comparaison.

13. Procédé de surveillance du fonctionnement d'un dispositif de mesure de niveau de remplissage, en particulier, d'un commutateur de fin de course à vibrations, selon lequel
- en mode de fonctionnement normal, un premier dispositif oscillant piézo-électrique (SP) est relié comme installation d'émission et un second dispositif oscillant piézo-électrique (EP), fonctionne comme installation de réception reliée à une entrée (P0) et à une sortie (P4) d'un circuit oscillant (0), et
- pour surveiller le fonctionnement en mode de surveillance, on active un circuit de surveillance,
procédé **caractérisé en ce qu'**
- en mode de surveillance, les dispositifs oscillants (SP, EP) sont branchés en parallèle et ils sont eux-mêmes branchés en série sur une installation de mesure capacitive pour fournir une capacité (c) constituant une indication du fonctionnement des dispositifs oscillants (SP, EP), et
- une oscillation d'une source d'oscillations de fréquence définie (f), notamment de fréquence de résonance du circuit oscillant (O), étant branchée en série sur les dispositifs oscillants (SP, EP) branchés en parallèle entre-eux, et avec un condensateur de référence (K1) de l'installation de mesure capacitive.

14. Procédé de surveillance du fonctionnement d'un dispositif de mesure de niveau de remplissage et en particulier, commutateur de fin de course de vibrations, selon lequel
- en mode de fonctionnement normal, un premier dispositif oscillant piézo-électrique (SP) constitue une installation d'émission et un second dispositif oscillant piézo-électrique (EP), constitue une installation de réception en étant reliée à l'entrée (P0) et à la sortie (P4) d'un circuit oscillant (0), et
- pour surveiller le fonctionnement, un circuit de surveillance est activé pendant le mode de surveillance,
procédé **caractérisé en ce qu'**
- en mode de surveillance, les deux dispositifs oscillants (SP, EP) sont branchés en parallèle et ces dispositifs oscillants branchés en parallèle, sont eux-mêmes mis en série avec une installation de mesure d'intensité de courant de transfert de charge, pour prélever un courant de transfert de charge entre les installations oscillantes, et
- on fournit une capacité (c) comme indication du fonctionnement des dispositifs oscillants (SP, EP),
- une oscillation d'une source d'oscillations à fréquence définie (f), notamment à fréquence de résonance du circuit oscillant (O), étant appliquée en série aux installations d'oscillations branchées en parallèle l'une par rapport à l'autre, et à une résistance (Rx) de l'installation de mesure de courant de transfert de charge.

15. Procédé selon la revendication 13 ou 14,
selon lequel
pour le fonctionnement en mode de surveillance, les dispositifs oscillants (SP, EP) branchés en parallèle l'un avec l'autre, reçoivent une tension de contrôle d'un générateur de tension à la place d'une tension de circuit oscillant fournie par le circuit oscillant (0).

16. Procédé selon la revendication 13 ou 14,
**caractérisé en ce que**
le circuit oscillant (0) comporte un filtre accordé (F) et un processeur (P) fonctionnant en mode de surveillance, relie le circuit oscillant au diapason relié aux dispositifs oscillants (SP, EP) pour réaliser l'accord en réglant le filtre (F).
